# EUROPÄISCHE PATENTSCHRIFT

(11) **EP 1 608 723 B1**
(45) Veröffentlichungstag und Bekanntmachung des Hinweises auf die Patenterteilung: **19.10.2016**
(21) Anmeldenummer: 04709134.3
(22) Anmeldetag: 07.02.2004
(51) Int. Cl.: C10J 3/76, C10J 3/86, F28F 13/12, F28F 21/02

(54) **VERWENDUNG EINES ABHITZEKESSELS**
USE OF HEAT-RECOVERY BOILER
UTILISATION D'UNE CHAUDIERE A RECUPERATION

(30) Priorität: 20.03.2003 DE 10312529
(43) Veröffentlichungstag der Anmeldung: 28.12.2005
(73) Patentinhaber: Air Liquide Global E&C Solutions Germany GmbH, 60439 Frankfurt am Main (DE)
(72) Erfinder: BOLL, Walter, 60388 Frankfurt am Main (DE); RÖLL, Werner, 63607 Wächtersbach (DE); ERDMANN, Christoph, 65719 Hofheim (DE); WAGNER, Ulrich, 06408 Bierndorf (DE); WURZEL, Thomas, 61440 Oberursel/Ts. (DE)
(74) Vertreter: Meyer-Dulheuer, Karl-Hermann
(86) Internationale Anmeldenummer: PCT/EP2004/001140
(87) Internationale Veröffentlichungsnummer: WO 2004/083347

(56) Entgegenhaltungen:
- WO-A-86/02940
- DE-A- 3 414 140
- US-A- 3 318 588
- US-A- 4 950 308
- US-A- 5 645 616

## Beschreibung

Die Erfindung betrifft einen Abhitzekessel, der aus einem in einem Druckbehälter fest eingebauten Rohrbündel-Wärmeübertrager besteht und einer Vergasungseinrichtung nachgeschaltet ist, wobei in den von den heißen Prozessgasen durchströmten Rohren jeweils ein sich wenigstens über einen Teil der Länge des Rohrs erstreckender Verdrängungskörper unter Bildung eines Ringraums mit der Innenseite des Rohrs zentral koaxial eingesetzt ist.

In der chemischen Industrie finden Abhitzekessel zur Nutzung der Abwärme aus vorgeschalteten Prozessen für die Dampferzeugung breite Anwendung, indem heiße i.d.R. eine Temperatur von 800 bis 1300 °C aufweisende Prozessgase abgekühlt und gleichzeitig Hochdruckdampf erzeugt wird. Dabei kann es an der Innenoberfläche der Rohre zur Bildung von Ablagerungen kommen, die die Wärmeübertragung zwischen dem Prozessgas und der die Rohre umströmenden Kühlflüssigkeit infolge ihrer vergleichsweise niedrigeren Wärmeleitfähigkeit erheblich beeinträchtigen. Die Bildung solcher Ablagerungen ist entweder auf in den Prozessgasen vorhandene Stoffe oder auf solche Stoffe zurückzuführen, die sich erst in den Rohren bei der Abkühlung der Prozessgase bilden. Der Vorgang des Entstehens solcher nachteilig wirkender Ablagerungen wird in der Fachwelt als "Fouling" bezeichnet. Um Fouling in den Rohren zu begrenzen, ist es bekannt, den Prozessgasen eine ausreichende Strömungsgeschwindigkeit zu erteilen. Da aber die Strömungsgeschwindigkeit aus Gründen eines damit ansteigenden Druckverlustes nicht unbegrenzt erhöht werden kann, werden bekanntermaßen in die Kühlrohre Verdrängungskörper eingesetzt, die entweder die Turbulenz des Prozessgasstroms oder auch lokal dessen Strömungsgeschwindigkeit erhöhen sollen, wodurch die Ablagerung von Feststoffen vermindert und gleichzeitig die Wärmeübertragung verbessert wird. In nachteiliger Weise unterliegen die i.a. aus Metall bestehenden, vorzugsweise als geschlossene Einsteckrohre ausgebildeten Verdrängungskörper, insbesondere für den Fall, dass die Prozessgase höhere Konzentrationen an Kohlenmonoxid aufweisen, einem erheblichen als "Metal Dusting" bezeichneten korrosiven Angriff in einem Temperaturbereich von 400 bis 850 °C, vorzugsweise 450 bis 750 °C. Metal Dusting beruht auf der Anreicherung der Matrix eines metallischen Werkstoffs im oberflächennahen Bereich mit Kohlenstoff, wobei zunächst carbidische Verbindungen entstehen und bei weiterer Aufsättigung elementarer Kohlenstoff ausgeschieden wird. Durch das Ausscheiden des Kohlenstoffs wird das Werkstoffgefüge zerstört; so dass dieses erodiert. Voraussetzung für die Erosion ist das Vorliegen eines Potentials zur Kohlenstoffbildung. An den Komponenten eines durch Vergasung von Kohlenstoff erhaltenen Gasgemisches kann diese Potential durch nachfolgende Reaktionsgleichungen definiert werden:

CO + H₂ ↔ C + H₂O (CO-Reaktion)

2 CO ↔ C + CO₂ (Boudouard-Reaktion)

Aus der Zusammensetzung des durch die Vergasung erzeugten Gases lässt sich für jede der beiden Reaktionen die zugehörige Gleichgewichtstemperatur ermitteln. Da beide Reaktionen exotherm verlaufen, liegt ein Potential zur Bildung von Kohlenstoff vor, wenn mindestens eine dieser Temperaturen bei der Abkühlung des Gases unterschritten wird. Ob Metal Dusting tatsächlich stattfindet, hängt entscheidend von der zugehörigen Kinetik ab, deren Einflussgrößen von der lokalen Temperatur und dem Werkstoff bestimmt werden. Einerseits kann die Temperaturgrenze, unterhalb der aus Gründen der Kinetik Metal Dusting nicht mehr eintritt, auf Grund von Erfahrungen als relativ gut gesichert angesehen werden, andererseits ist noch weitgehend offen, wie weit unterschiedliche metallische Werkstoffe für den Einsatz oberhalb dieser Temperaturgrenze geeignet sind. Grundsätzlich anfällig für Metal Dusting sind alle Eisen- und Nickellegierungen, wobei allerdings in Abhängigkeit von den weiteren die mechanisch-technologischen Eigenschaften der Legierungen bestimmenden Komponenten eine mehr oder weniger starke Ausprägung des Metal Dustings erfolgt. Bisher ist die Entwicklung eines gegen Metal Dusting resistenten Werkstoffs nicht gelungen, noch gibt es eine hinreichend gesicherte Theorie zu den Detailvorgängen beim Metal Dusting.

Im allgemeinen lässt sich Metal Dusting dadurch vermeiden, dass die Verdrängungskörper nur Prozessgasen ausgesetzt werden, deren Temperaturen unterhalb oder oberhalb des kritischen Temperaturbereichs von 400 bis 850 °C liegen. Beim Abhitzekessel werden die von den heißen Prozessgasen durchströmten Rohre durch die diese umgebende Kühlflüssigkeit und die erfolgende Verdampfungsreaktion auf deutlich unterhalb von 400 °C liegende Temperaturen abgekühlt, so dass die Rohre keinem Metal Dusting unterliegen. Da sich jedoch der Einsatz von Verdrängungskörpern in dem kritischen Temperaturbereich von 400 bis 850 °C nicht unter allen Umständen vermeiden lässt, ist es notwendig, das Risiko von Metal Dusting bei der Werkstoff-Auswahl für die Verdrängungskörper zu berücksichtigen.

Das Dokument US3318588 offenbart einen Abhitzekessel (12), der aus einem in einem Druckbehälter (40) fest eingebauten Rohrbündel-Wärmeübertrager (38) besteht wobei die Rohre (38) des Rohrbündel-Wärmeübertragers von heißen Prozessgasen durchströmt werden.

Es ist die Aufgabe der vorliegenden Erfindung, bei dem eingangs beschriebenen Abhitzekessel in die Rohre des Rohrbündel-Wärmeübertragers einsteckbare einem korrosiven Angriff durch Metal Dusting widerstehende Verdrängungskörper bereitzustellen.

Gelöste ist diese Aufgabe gemäß Anspruch 1 dadurch, dass die Verdrängungskörper aus Graphit bestehen.

Um ein Schwingen der Verdrängungsköper in den Rohren zu vermeiden, sind auf dem Umfang der Verdrängungskörper, vorzugsweise stofflich einteilig mit den Verdrängungskörpern verbundene Zentrierelemente angebracht.

Vorteilhafte Ausbildungen der Verdrängungskörper sind in den Ansprüchen 3 bis 8 wiedergegeben.

Erfindungsgemäß sind die Verdrängungskörper von der Austrittsseite der Prozessgase her in die Rohre eingesetzt und erstrecken sich über wenigstens 30 % der Rohrlänge.

Zweckmäßigerweise sind die Verdrängungskörper aus mehreren Abschnitten, die über mechanische Mittel aus Kohlenstoff, wie Gewindestifte oder dergl, verbunden sind, zusammengesetzt.

Die Erfindung ist nachstehend näher und beispielhaft erläutert.

Durch Umsetzung von Erdgas mit Dampf und Sauerstoff bei einer Temperatur von 970 °C wird ein Gasgemisch erzeugt, das aus 0,1 Vol.-% N₂, 6,0 Vol-% CO₂, 14.5 Vol.-% CO, 47.3 Vol.-% H₂, 0.7 Vol.-% CH₄ und 31,4 Vol.% H₂O zusammengesetzt ist. Das dem Spaltgaskessel zugeführte Gasgemisch weist einen Druck von 30 bar und ein effektive Temperatur von 970 °C auf. Aus der Zusammensetzung des Gasgemisches ergibt sich eine Gleichgewichtstemperatur von 788 °C für die CO-Reduktion und von 820 °C für die Boudouard-Reaktion. Das bedeutet, daß bei Unterschreiten einer Temperatur von 820 °C ein Potential für Metal Dusting vorliegt. In dem im Spaltgaskessel angeordneten als Abhitzekessel bezeichneten Rohrbündel-Wärmeübertrager wird das Gasgemisch deshalb auf eine Temperatur von ca. 450 °C abgekühlt. Das Gasgemisch enthält in geringen Mengen Komponenten, die mit dem CO₂ bei der Abkühlung im Abhitzekessel in Abhängigkeit von der Temperatur feste oder flüssige Verbindungen eingehen. Solche Komponenten sind typischerweise Alkali-Verbindungen, die z.B. mit dem Erdgas, Dampf und/oder Sauerstoff eingetragen werden oder auch aus im Reaktionssystem vorhandenen keramischen Massen, wie Reaktorauskleidung oder Katalysatoren, herausgelöst werden. Vor allem Natrium und Kalium enthaltende Verbindungen bilden bei Abkühlung feste Carbonate, die sich zumindest teilweise auf den Wärmeübertragerflächen ablagern und damit die Wärmeübertragung verschlechtern mit der Folge, daß die Prozeßgastemperatur am Austritt aus dem Abhitzekessel auf eine Temperatur von ca. 500 °C ansteigt. Da eine solche Temperatur für die dem Abhitzekessel nachgeordnete Prozesseinheit schädlich ist, wird in die Kühlrohre jeweils ein aus einer Nickel-Chrom-Legierung vom Typ Inconel® 601, die nach derzeitigem Kenntnisstand mit die höchste Widerstandsfähigkeit gegenüber Metal Dusting zeigt, bestehendes geschlossenes Rohr als Verdrängungskörper unter Bildung eines Ringraums mit der Innenseite des Kühlrohrs eingesetzt, wodurch der freie Querschnitt des Kühlrohrs verengt und die Strömungsgeschwindigkeit der Prozessgase erhöht werden, so dass die Austrittstemperatur der Prozeßgase auf ca. 450 °C gesenkt wird.

Von erheblichem Nachteil ist jedoch, dass sich die Verdrängungskörper nach einem relativ kurzen Betriebseinsatz von nur wenigen Wochen infolge von Korrosion teilweise auflösen und dadurch deutliche Mengen rußartigen Feststoffs im Kondensat der Gaserzeugungsanlage anfallen. Die Form der Korrosionserscheinung sowie die Bildung von Kohlenstoff weisen eindeutig auf einen Materialangriff durch Metal Dusting hin. Darüberhinaus führt das bei der Korrosion freigesetzte Nickel zu einer Schädigung von Katalysatoren, die gfl. in dem Abhitzekessel nachgeschalteten Prozesseinheiten angeordnet sind.

Zur Erhöhung der Widerstandsfähigkeit werden deshalb die aus Inconel® 601 bestehenden Verdrängungskörper versuchsweise zusätzlich mit einer 1.5 mm dicken Schicht aus Zirkonsilikat überzogen. Im Ergebnis unterliegen diese Verdrängungskörper einem vergleichsweise noch deutlicheren korrosiven Angriff durch Metal Dusting als dieses bei unbeschichteten Verdrängungskörper der Fall ist.

Demgegenüber weisen die gemäß der Erfindung eingesetzten aus Graphit bestehenden Verdrängungskörper auch nach einer relativ langen Betriebszeit von mehr als einem Jahr keinerlei Schädigungen auf.

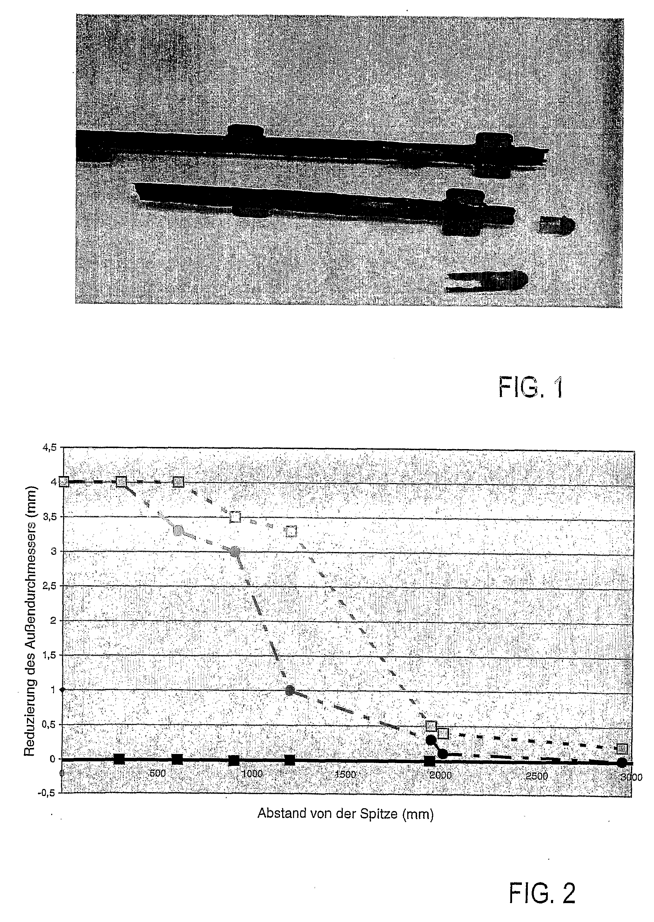

Auf dem Foto gemäß Fig.1 sind durch Metal Dusting weitgehend zerstörte aus dem Werkstoff Inconel® 601 bestehende Verdrängungskörper wiedergegeben.

Das Diagramm gemäß Fig.2 zeigt den Verlauf des Korrossionsangriff durch Metal Dusting entlang eines 3000 mm langen Verdrängungskörper aus den Werkstoffen Inconel® 601 (Strichpunktlinie), Inconel® 601 beschichtet mit Zirkonsilikat (Strichlinie) und Graphit (Volllinie). Es zeigt sich, dass der korrosive Angriff auf die Verdrängungskörper aus den Werkstoffen Inconel® 601 und Inconel® 601 beschichtet mit Zirkonsilikat in den Zonen am größten ist, die die höchsten Temperaturen aufweisen. Danach nimmt der korrosive Angriff bis zum Ende der Verdrängungskörper auf < 0.5mm ab. Der aus Graphit bestehende Verdrängungskörper zeigt keine Veränderungen.

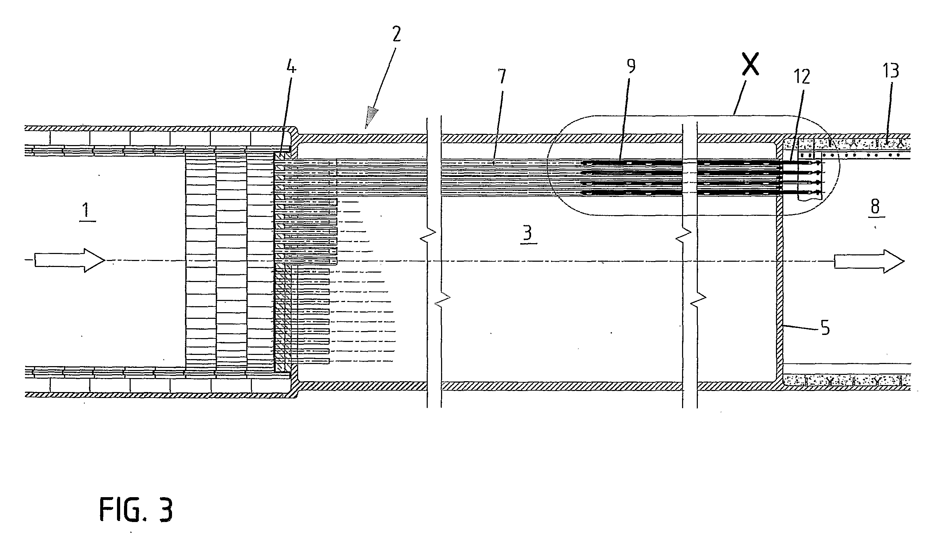

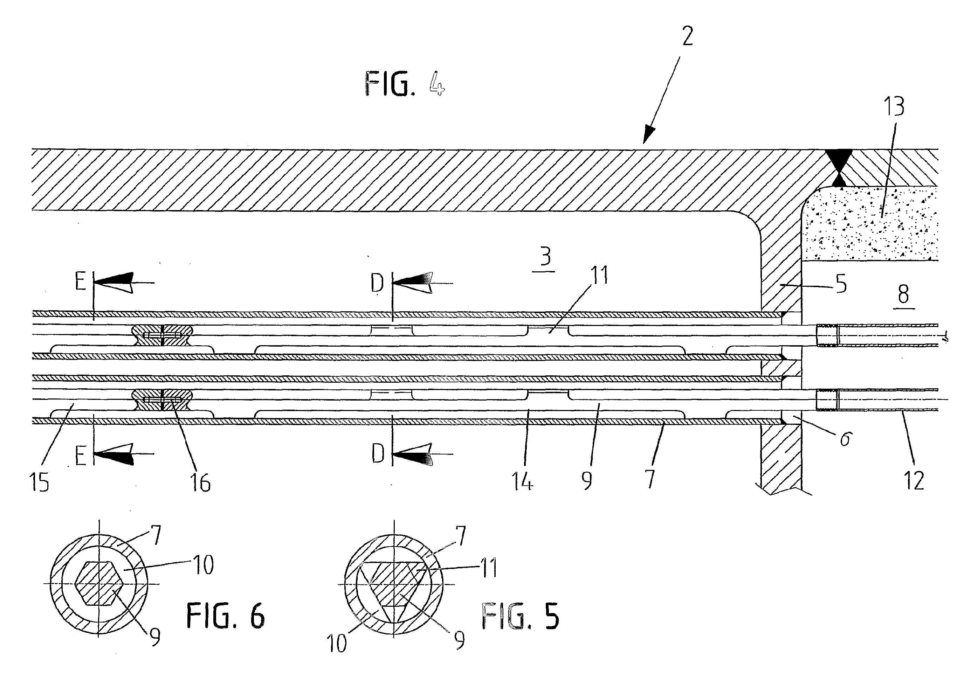

Durch die Zeichnungen Fig. 3 - Fig. 6 wird die Erfindung näher und beispielhaft erläutert. Es zeigen:
Fig. 3 einen Teillängsschnitt durch einen Spaltgaskessel im Bereich des Abhitzekessels mit in dessen Kühlrohren eingesetzten Verdrängungskörpern aus Graphit
Fig. 4 eine vergrößerte Darstellung des Details X der Fig. 1
Fig. 5 einen Querschnitt entlang der Schnittlinie D - D der Fig. 4
Fig. 6 einen Querschnitt entlang der Schnittlinie E - E der Fig. 4

Durch Umsetzung von Erdgas mit Dampf und Sauerstoff wird ein eine Temperatur von 970 °C aufweisendes im wesentlichen aus H₂, CO, CO₂, H₂O und CH₄ bestehendes Gasgemisch erzeugt, das über die Eintrittskammer (1) des Spaltgaskessels (2) dem Abhitzekessel (3) aufgegeben wird. Der Abhitzekessel (3) enthält gaseintritts- und gasaustrittsseitig jeweils einen festen Rohrboden (4,5), in dessen Bohrungen (6) die 3000 mm langen Kühlrohre (7) mit ihren Enden eingeschweißt sind. Das aus dem Abhitzekessel (3) austretende Gasgemisch verlässt den Spaltgaskessel (2) über die Austrittskammer (8). In die Kühlrohre (7) ist jeweils ein aus Graphit gebildeter im Querschnitt sechseckiger Verdrängungskörper (9) unter Bildung eines Ringraums (10) mit der Innenseite des Kühlrohrs (7) konzentrisch eingesetzt. Auf dem Mantel des Verdrängungskörpers (9) sind entlang einer spiralförmigen Linie im Querschnitt dreieckförmige mit der Spitze an der Innenseite der Kühlrohre (7) anliegende Zentrierelemente (11) angebracht. Die Verdrängungskörper (9) besitzen eine Länge von 3000 mm und sind von der Seite des Gasaustritts her in die in die Kühlrohre (7) eingesetzt, wobei auf die über den gasaustrittsseitigen Rohrboden (5) vorstehenden Endstücke der Verdrängungskörper (9) jeweils eine rohrförmige Halterung (12) aufgeschraubt ist. Die Austrittskammer (8). des Spaltgaskessels (2) ist mit einer Keramikschicht (13) ausgekleidet. Die Verdrängungskörper (9) bestehen jeweils aus Einzelabschnitten (14,15), die über Kohlenstoff-Gewindestifte (16) miteinander verbunden sind.

## Patentansprüche

1. Verwendung eines Abhitzekessels (3), der aus einem in einem Druckbehälter (2) fest eingebauten Rohrbündel-Wärmeübertrager besteht und einer Vergasungseinrichtung nachgeschaltet wird, wobei die Rohre (7) des Rohrbündel-Wärmeübertragers von heißen Prozessgasen bei Temperaturen durchströmt werden, die zumindest teilweise zwischen 450 und 970°C liegen, **dadurch gekennzeichnet, dass** in die Rohre (7) jeweils ein sich wenigstens über einen Teil der Länge des Rohrs (7) erstreckender Verdrängungskörper (9) aus Graphit unter Bildung eines Ringraums (10) mit der Innenseite des Rohrs (7) zentral koaxial eingesetzt wird.

2. Verwendung eines Abhitzekessels (3) nach Anspruch 1, **gekennzeichnet durch** auf dem Umfang des Verdrängungskörpers (9) befindliche, vorzugsweise stofflich einteilig mit dem Verdrängungskörper (9) verbundene Zentrierelemente (11).

3. Verwendung eines Abhitzekessels (3) nach einem der Ansprüche 1 und 2, **gekennzeichnet durch** in mehreren Querschnittsebenen des Verdrängungskörpers (9) radial verlaufend angebrachte Zentrierelemente (11), wobei zwischen zwei benachbarten Zentrierelementen (11) jeweils ein im Querschnitt kreisausschnittförmiger Durchgang besteht.

4. Verwendung eines Abhitzekessels nach einem der Ansprüche 1 und 2, **dadurch gekennzeichnet, dass** die Zentrierelemente (11) auf einer schräg oder spiralförmig zur Achse des Kühlrohrs (7) verlaufenden Linie angeordnet sind.

5. Verwendung eines Abhitzekessels (3) nach einem der Ansprüche 1 bis 4, **dadurch gekennzeichnet, dass** der Verdrängungskörper (7) den Querschnitt eines Kreises besitzt.

6. Verwendung eines Abhitzekessels (3) nach einem der Ansprüche 1 bis 4, **dadurch gekennzeichnet, dass** der Verdrängungskörper (7) den Querschnitt eines regulären Polygons, vorzugsweise eines Sechsecks, besitzt.

7. Verwendung eines Abhitzekessels (3) nach Anspruch 6, **gekennzeichnet durch** im Querschnitt gleichschenklige dreieckförmige Zentrierelemente (11), wobei die Länge der Grundlinie der Zentrierelemente der Länge der korrespondierenden Seite des Polygons entspricht.

8. Verwendung eines Abhitzekessels (3) nach Anspruch 6, **gekennzeichnet durch** im Querschnitt gleichschenklige trapezförmige Zentrierelemente (11), wobei die Länge der Grundlinie der Zentrierelemente der Länge der korrespondierenden Seite des Polygons entspricht.

9. Verwendung eines Abhitzekessels (3) nach einem der Ansprüche 1 bis 8, **dadurch gekennzeichnet, dass** die Verdrängungskörper (9) von der Austrittsseite der Prozessgase her in die Rohre (7) eingesetzt werden und sich über wenigstens 30% der Rohrlänge erstrecken.

10. Verwendung eines Abhitzekessels (3) nach einem der Ansprüche 1 bis 9, **dadurch gekennzeichnet, dass** die Verdrängungskörper (9) jeweils aus mehreren über mechanische aus Kohlenstoff bestehende Mittel, wie Gewindestifte oder dergleichen, verbundenen Abschnitten zusammengesetzt sind.

## Claims

1. Use of a heat-recovery boiler (3), which consists of a tube bundle heat exchanger which is fixedly installed in a pressurized container (2) and which is connected downstream a gasification device, wherein the tubes (7) of the tube bundle heat exchanger are flown through by hot processing gas at temperatures which are partially between 450 and 970 °C, **characterized in that** a displacement body (9) of graphite extending at least over a part of the length of the tube (7) is inserted into said tubes (7) centrally coaxially with the inner side of the tube (7), thereby forming an annular space.

2. Use of a heat-recovery boiler (3) according to claim 1, **characterized by** centering elements (11) which are located around the periphery of the displacement body (9) and are preferably materially in one piece connected to the displacement body (9).

3. Use of a heat recovery boiler (3) according to one of claims 1 and 2, **characterized by** centering elements (11) attached running radially in multiple cross-sectional planes of the displacement body (9), wherein a passage, which is a circular section in cross-section, exists between two neighboring centering elements (11) respectively.

4. Use of a heat-recovery boiler according to one of claims 1 and 2, **characterized in that** the centering elements (11) are arranged on a line running obliquely or helically to the axis of the cooling pipe (7).

5. Use of a heat-recovery boiler (3) according to one of claims 1 to 4, **characterized in that** the displacement body (7) has the cross-section of a circle.

6. Use of a heat-recovery-boiler (3) according to one of claims 1 to 4, **characterized in that** the displacement body (7) has the cross-section of a regular polygon, preferably a hexagon.

7. Use of a heat-recovery boiler (3) according to claim 6, **characterized by** centering elements (11) which are equilateral triangles in cross-section, the length of the base line of the centering elements corresponding to the length of the corresponding side of the polygon.

8. Use of a heat-recovery boiler (3) according to claim 6, **characterized by** centering elements (11) which are equilateral trapezoids in cross-section, the length of the base line of the centering elements corresponding to the length of the corresponding side of the polygon.

9. Use of a heat-recovery boiler (3) according to one of claims 1 to 8, **characterized in that** the displacement bodies (9) are inserted into the pipes (7) from the outlet side of the process gas and extend over at least 30% of the pipe length.

10. Use of a heat-recovery boiler (3) according to one of claims 1 to 9, **characterized in that** the displacement bodies (9) are each assembled from multiple sections connected via mechanical elements consisting of carbon, such as threaded pins or the like.

## Revendications

1. Utilisation d'une chaudière à récupération (3) qui est constituée d'un échangeur thermique à faisceau tubulaire (7) intégré de manière fixe dans une cuve sous pression (2) et qui est montée en aval d'un dispositif de gazéification, les tubes traversés par les gaz de procédé chauds en températures qui sont au moins partiellement entre 450 et 970 °C, **caractérisée en ce qu**' un corps de déplacement (9) en graphite s'étendant au moins sur une partie de la longueur de tube (7) est inséré de manière centralisée coaxiale formant une chambre annulaire (10) avec la face intérieure de tube (7).

2. Utilisation d'une chaudière à récupération (3) selon la revendication 1, **caractérisée par** des éléments de centrage (11) se trouvant à la périphérie du corps de déplacement (9) et de préférence liées matériellement de manière intégrale au corps de déplacement (9).

3. Utilisation d'une chaudière à récupération (3) selon l'une des revendications 1 et 2, **caractérisée par** des éléments de centrage (11) installés en s'étendant de manière radiale dans plusieurs niveaux du corps de déplacement (9), dans lequel il existe respectivement un passage profilé sous forme de section de cercle entre deux éléments de centrage (11).

4. Utilisation d'une chaudière à récupération (3) selon l'une des revendications 1 et 2, **caractérisée en ce que** les éléments de centrage (11) sont disposés sur une ligne s'étendent obliquement ou en spirale par rapport à l'axe du tube de refroidissement.

5. Utilisation d'une chaudière à récupération (3) selon l'une des revendications 1 à 4, **caractérisée en ce que** le corps de déplacement (7) a la section transversale d'un cercle.

6. Utilisation d'une chaudière à récupération (3) selon l'une des revendications 1 à 4, **caractérisée en ce que** le corps de déplacement (7) a la section transversale d'un polygone équiangle, de préférence d'un hexagone.

7. Utilisation d'une chaudière à récupération (3) selon la revendication 6, **caractérisée par** des éléments de centrage (11) isocèles triangulaires en section transversale, dans laquelle la longueur de la ligne de base correspond à la longueur de la coté correspondante du polygone.

8. Utilisation d'une chaudière à récupération (3) selon la revendication 6, **caractérisée par** des éléments de centrage (11) isocèles trapézoïdales en section transversale, dans laquelle la longueur de la ligne de base correspond à la longueur du côté correspondante du polygone.

9. Utilisation d'une chaudière à récupération (3) selon l'une des revendications 1 à 8, **caractérisée en ce que** les corps de déplacement (9) sont insérées dans les tubes (7) du côté gauche et s'étendent sur au moins 30 % de la longueur du tube.

10. Utilisation d'une chaudière à récupération (3) selon l'une des revendications 1 à 9, **caractérisée en ce que** les corps de déplacement (9) sont respectivement composées de plusieurs moyens mécaniques consistant en carbone, tels que des tiges filetées ou similaires.
